(19) Europäisches Patentamt
European Patent Office
Office européen des brevets

(11) **EP 4 207 348 B1**

(12) **EUROPEAN PATENT SPECIFICATION**

(45) Date of publication and mention
of the grant of the patent:
**08.07.2026 Bulletin 2026/28**

(21) Application number: **21883171.7**

(22) Date of filing: **19.10.2021**

(51) International Patent Classification (IPC):
*H01M 4/62* (2006.01)    *H01M 4/13* (2010.01)
*H01M 4/139* (2010.01)    *H01M 4/04* (2006.01)
*H01M 10/052* (2010.01)    *H01M 4/131* (2010.01)
*H01M 4/1391* (2010.01)    *H01M 4/505* (2010.01)
*H01M 4/525* (2010.01)    *H01M 10/0525* (2010.01)
*H01M 4/02* (2006.01)

(52) Cooperative Patent Classification (CPC):
**H01M 4/131; H01M 4/0404; H01M 4/13;**
**H01M 4/139; H01M 4/1391; H01M 4/505;**
**H01M 4/525; H01M 4/623; H01M 4/625;**
**H01M 10/052; H01M 10/0525;** H01M 2004/021;
H01M 2004/028; Y02E 60/10

(86) International application number:
**PCT/KR2021/014534**

(87) International publication number:
**WO 2022/086102 (28.04.2022 Gazette 2022/17)**

(54) **ELECTRODE FOR SECONDARY BATTERY, SECONDARY BATTERY INCLUDING SAME, AND METHOD FOR MANUFACTURING ELECTRODE**

ELEKTRODE FÜR SEKUNDÄRBATTERIE, SEKUNDÄRBATTERIE DAMIT UND VERFAHREN ZUR HERSTELLUNG DER ELEKTRODE

ÉLECTRODE POUR BATTERIE SECONDAIRE, BATTERIE SECONDAIRE LA COMPRENANT, ET PROCÉDÉ DE FABRICATION D'ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2020 KR 20200137054**
**15.10.2021 KR 20210137263**

(43) Date of publication of application:
**05.07.2023 Bulletin 2023/27**

(73) Proprietor: **LG Energy Solution, Ltd.**
**Seoul 07335 (KR)**

(72) Inventors:
• **KIM, Myeongsoo**
**Daejeon 34122 (KR)**
• **KIM, Jeonggil**
**Daejeon 34122 (KR)**
• **KIM, Taegon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-2015/161289    JP-B2- 6 311 670
KR-A- 19990 067 072    KR-A- 20140 099 715
KR-A- 20140 099 715    KR-A- 20160 145 043
KR-A- 20180 121 411    KR-B1- 100 270 136
US-A1- 2019 305 316

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

[TECHNICAL FIELD]

Cross Citation with Related Application(s)

This application claims the benefit of Korean Patent Application No. 10-2020-0137054 filed on October 21, 2020 and Korean Patent Application No. 10-2021-0137263 filed on October 15, 2021 in the Korean Intellectual Property Office.

The present disclosure relates to an electrode for secondary battery, a secondary battery including same, and a method of manufacturing an electrode, and more particularly, to an electrode for secondary battery having improved strength and resistance reduction effect, a secondary battery including same, and a method of manufacturing an electrode.

[BACKGROUND]

Along with the technology development and increased demand for mobile devices, demand for secondary batteries as energy sources has been rapidly increasing. Among these secondary batteries, a lithium secondary battery having high energy density and a high voltage, a long cycle lifespan, and a low self-discharge rate is commercially available and widely used.

In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, research on the use of a lithium secondary battery having high energy density is actively being conducted, a part of which are in the commercialization stage.

Conventional electrodes for secondary batteries have generally been manufactured in a wet manner. However, when the electrode is manufactured in a wet manner, a heat treatment process at a high temperature is essentially required, and there is a risk that the metal oxide may be damaged. Therefore, there is a growing need to develop an electrode manufactured in a dry manner.

US2019/305316 discloses a dry electrode film for use in a battery. The electrode film comprises an active material and a dry binder. The dry binder comprises two different kinds of binders.

WO2015/161289 discloses an energy storage device comprising an anode and a cathode. At least one of the cathode and the anode comprises a PTFE composite binder material.

KR20140099715 relates to a binder in the preparation of a cathode comprising a first polymer and a second polymer.

[DETAILED DESCRIPTION OF THE INVENTION]

[Technical Problem]

It is an object of the present disclosure to provide an electrode for secondary battery having improved tensile strength and resistance reduction effect, a secondary battery including same, and a method of manufacturing an electrode.

The objects of the present disclosure are not limited to the aforementioned objects, and other objects which are not described herein should be clearly understood by those skilled in the art from the following detailed description and the accompanying drawings.

[Technical Solution]

This problem is solved by the appended set of claims.

[Advantageous Effects]

According to embodiments of the present disclosure, an electrode for secondary battery and a secondary battery including the same are manufactured by using an electrode composition including binders having mutually different molecular weights calculated from the SSG value, whereby the strength of the electrode can be improved, and the resistance reduction effect of the secondary battery including the electrode can be improved.

The effects of the present disclosure are not limited to the effects mentioned above and additional other effects not described above will be clearly understood from the description of the appended claims by those skilled in the art.

## [BRIEF DESCRIPTION OF THE DRAWINGS]

Fig. 1 is a flowchart showing a method of manufacturing an electrode for secondary battery according to an embodiment of the present disclosure;

Fig. 2 is a graph for comparing a tensile strength, a contact angle deviation and an initial discharge capacity according to the molecular weight calculated from the SSG value of the binder of an electrode for secondary battery, in Examples and Comparative Examples of the present disclosure;

Fig. 3 is a graph for comparing a tensile strength, a contact angle deviation and an initial discharge capacity according to the content of the binder of an electrode for secondary battery, in Examples and Comparative Examples of the present disclosure;

Fig. 4 is a graph for comparing a tensile strength, a contact angle deviation and an initial discharge capacity according to the content ratio of the first binder and the second binder of an electrode for secondary battery, in Examples and Comparative Examples of the present disclosure; and

Fig. 5 is a graph for comparing a tensile strength, a contact angle deviation and an initial discharge capacity according to the molecular weight of the second binder of an electrode for secondary battery, in Examples and Comparative Examples of the present disclosure.

## [DETAILED DESCRIPTION OF THE EMBODIMENTS]

Hereinafter, various embodiments of the present disclosure will be described in detail with reference to the accompanying drawings so that those skilled in the art can easily carry out them.

Now, an electrode for secondary battery according to an embodiment of the present disclosure will be described.

The electrode for secondary battery according to an embodiment of the present disclosure includes an electrode current collector; and an electrode layer formed of a freestanding film on the electrode current collector. The electrode layer includes an electrode composition in which an active material, a conductive material, a first binder and a second binder are dry-mixed.

The electrode layer may be formed by a lamination process after being first produced into a freestanding film, and attaching the freestanding film onto the electrode current collector. Here, the freestanding film may have a tensile strength of 8 kgf/cm$^2$ or more and 40 kgf/cm$^2$ or less. 1 kgf/cm$^2$ is equal to 98,066.5 Pascals (Pa).

Thereby, the freestanding film may be in a state in which the active material, the conductive material, the first binder and the second binder included in the electrode composition are mixed with each other with high binding force, and the freestanding film may be easily stored in the form of a roll. Therefore, it may be effective in increasing the productivity and improving the flexibility of the electrode. However, when the tensile strength of the freestanding film is less than 8kgf/cm$^2$, during charge and discharge, cracks are generated between the electrode active materials in the electrode, which causes a problem that the lifetime characteristics are also reduced.

Further, the electrode for secondary battery has a contact angle deviation of 0.01 degrees or more and 5.0 degrees or less. More preferably, the electrode for secondary battery has a contact angle deviation of 0.05 degrees or more and 4.0 degrees or less. In one example, the electrode for secondary battery has a contact angle deviation of 0.1 degrees or more and 3.0 degrees or less. Here, the contact angle may mean an average and standard deviation of contact angles for each edge and the center portion of the electrode surface.

Consequently, the electrode for secondary battery may have a small deviation in contact angle, and thus the dispersibility of the binder included in the electrode composition can be improved. Further, since the bridging effect of the binder resulting therefrom is excellent, the resistance reduction effect of the electrode containing the above-mentioned electrode composition can be excellent.

However, when the contact angle of the electrode for secondary battery is more than 5.0 degrees, the deviation in the contact angle becomes larger, so that the dispersibility of the binder included in the electrode composition can be reduced. Further, the bridging effect of the binder resulting therefrom is reduced, the resistance of the electrode containing the electrode composition is high, and the discharge capacity of the battery cell can also be reduced.

Next, each component included in the electrode for secondary battery according to an embodiment of the present disclosure will be described in detail.

The electrode for secondary battery includes a first and a second binder, both binders comprising polytetrafluoroethylene (PTFE).

Here, the first binder and the second binder performs the role of improving adhesion between active material particles and an adhesive force between the active material and the current collector.

Here, polytetrafluoroethylene (PTFE) has a characteristic that the fibers are pulled out from the particles as a shearing force is applied. That is, in the electrode for secondary battery according to an embodiment of the present disclosure, a strong shearing force is applied to the electrode composition containing polytetrafluoroethylene (PTFE) as the first binder and the second binder, respectively, so that the electrode composition can be mixed by a physical mixing method in accordance with the fiberization of polytetrafluoroethylene (PTFE).

Therefore, in the electrode for secondary battery according to an embodiment of the present disclosure, the electrode composition is dry-mixed without a separate solvent or additive, whereby it is very effective for bridging between active material particles or bridging between active material particles and a current collector, and also can prevent damage to the active material that occurs during the heat treatment process at high temperature according to the existing mixing method.

Here, polytetrafluoroethylene (PTFE) forms a fiber as the $CF_2$-$CF_2$ chain contained in polytetrafluoroethylene (PTFE) is elongated, and such feature can be most affected by the molecular weight of polytetrafluoroethylene (PTFE). However, polytetrafluoroethylene (PTFE) is chemically very stable, and thus it is difficult to measure the molecular weight by conventionally known methods. The molecular weight can be measured by calculating with a SSG (Specific Standard Gravity) value as in the following Equation 1.

$$\text{SSG (Specific Standard Gravity)} = 2.612 - 0.58 \times \log(Mx), \ (M_x = \text{molecular weight of x}) \quad (1)$$

Here, the SSG value can be measured according to ASTM D-1457, ASTM D-4895, or the like. However, the present disclosure is not limited thereto, and any measurement method capable of measuring the SSG value of polytetrafluoroethylene (PTFE) can be included in the present embodiment.

In the electrode for secondary battery according to an embodiment of the present disclosure, the molecular weight of the first binder is larger than the molecular weight of the second binder. In other words, the molecular weight of the first binder is similar to or larger than that of conventional polytetrafluoroethylene (PTFE), and the molecular weight of the second binder may be similar to or smaller than that of conventional polytetrafluoroethylene (PTFE).

Based on the SSG value according to Equation 1, the molecular weight of the conventional polytetrafluoroethylene (PTFE) corresponds to the SSG value in the range of 2.160 or more and 2.180 or less. Further, when polytetrafluoroethylene (PTFE) has an SSG value larger than 2.210, that is, polytetrafluoroethylene (PTFE), which has an excessively low molecular weight, can generally be difficult to fiberize.

Here, the SSG value of the first binder is 2.0 or more and 2.169 or less, and the SSG value of the second binder may be 2.171 or more and 2.2 or less. More preferably, the SSG value of the first binder is 2.05 or more and 2.165 or less, and the SSG value of the second binder may be 2.175 or more and 2.2 or less. In one example, the SSG value of the first binder is 2.1 or more and 2.16 or less, and the SSG value of the second binder may be 2.180 or more and 2.2 or less.

Thereby, the electrode for a secondary battery according to the present embodiment includes a first binder having a relatively high molecular weight calculated from the SSG value as the binder, whereby the fiberization of the binder can be maximized, he bridging effect between particles inside the electrode composition is excellent, and the tensile strength can be excellent. In addition, the binder includes a second binder having a relatively low molecular weight calculated from the SSG value, whereby an agglomeration phenomenon of the binder is prevented, the dispersibility is improved, and thus, the resistance reduction effect of the electrode containing the electrode composition can be excellent. That is, the electrode for secondary battery according to the present embodiment may be excellent in the resistance reduction effect of the electrode while improving the strength.

Unlike the same, when the SSG values of the first binder and the second binder are out of the above-mentioned range, and each SSG value falls within the range of 2.160 or more and 2.180 or less, there is a problem that at least a part of the first binder and the second binder is fiberized with each other, and an agglomeration phenomenon occurs. Such agglomeration phenomenon may reduce the dispersibility between particles in the electrode slurry, and can reduced the resistance reduction effect of the electrode containing the electrode composition.

Further, when the SSG values of the first binder and the second binder are out of the above-mentioned range and have an excessively small SSG value, an agglomeration phenomenon of the first binder and the second binder may be excessively generated, so that the bridging effect between the active material particles and the binder can be reduced. Further, when the SSG values of the first binder and the second binder are out of the above-mentioned range and have an excessively large SSG value, the fiberization of the first binder and the second binder is not sufficiently generated, and thus, the tensile strength can be reduced.

Further, the total content of the first binder and the second binder is 1.01% by weight or more and 11.99% by weight or less based on the total weight of the electrode composition. More preferably, the total content of the first binder and the second binder is 1.5% by weight or more and 11% by weight or less based on the total weight of the electrode composition. In one example, the total content of the first binder and the second binder may be 2% by weight or more and 10% by weight or less based on the total weight of the electrode composition.

Thereby, the electrode for secondary battery according to the present embodiment contains the first binder and the second binder within the above-mentioned range, whereby the fiberization of the binder can be maximized, and the bridging effect between particles inside the electrode composition can be excellent, and thus the tensile strength can be excellent. In addition to this, it is possible to prevent an agglomeration phenomenon of the binder and improve the dispersibility, and thus can be excellent in the resistance reduction effect of the electrode containing the above electrode composition.

Unlike the same, when the total content of the first binder and the second binder is less than 1.01% by weight, the bridging effect between particles inside the electrode composition is reduced and thus, the tensile strength can also be greatly reduced. Further, when the content of the first binder and the second binder is more than 11.99% by weight, in the electrode including the electrode composition, the first binder and the second binder act as a resistance, which causes a problem that it is difficult to expect high output.

Further, the content ratio of the first binder and the second binder may be 0.1:10 to 10:0.1. More preferably, the content ratio of the first binder and the second binder may be 0.5:10 to 10:0.5. In one example, the content ratio of the first binder and the second binder may be to 10:1.

Therefore, the electrode for secondary battery according to the present embodiment contains the first binder and the second binder within the above range, whereby the fiberization of the binder can be maximized, the bridging effect between particles inside the electrode composition can be excellent, and thus the tensile strength can be excellent. In addition to this, it is possible to prevent an agglomeration phenomenon of the binder and improve the dispersibility, and thus can be excellent in the resistance reduction effect of the electrode containing the above electrode composition.

Unlike the same, when the content ratio of the first binder and the second binder is less than 0.1 and more than 10, the degree of fibrillation of the binder is reduced and the tensile strength can be greatly reduced. Further, when the content ratio of the first binder and the second binder is more than 10 and less than 0.1, the agglomeration phenomenon of the binder is well generated, and the resistance reduction effect of the electrode containing the above electrode composition can be reduced.

The active material may be a positive electrode active material. The positive active material may include, for example, lithium cobalt oxide ($LiCoO_2$), lithium nickel oxide ($LiNiO_2$), lithium manganese oxide, lithium copper oxide ($Li_2CuO_2$), vanadium oxide, a Ni-site type lithium nickel oxide, lithium manganese composite oxide, lithium manganese composite oxide having a spinel structure, $LiMn_2O_4$ in which a part of Li in formula is substituted with an alkaline earth metal ion, a disulfide compound; $Fe_2(MoO_4)_3$, and the like.

In one example, the active material may include lithium manganese oxide (LMO). Here, the active material may be contained in an amount of 85% by weight to 99% by weight based on the total weight of the electrode composition. More preferably, the active material may be contained in an amount of 87% by weight to 98% by weight based on the total weight of the electrode composition. **In** one example, the active material may be contained in an amount of 89% by weight to 97% by weight based on the total weight of the electrode composition.

The conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, carbon graphene and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and these may be used either singly or as a mixture of two or more. Here, the conductive material may be contained in an amount of 1% by weight to 10% by weight based on the total weight of the electrode.

The above-mentioned electrode for secondary battery may be included as a positive electrode in a secondary battery according to another embodiment of the present disclosure. More specifically, the secondary battery according to another embodiment of the present disclosure may include an electrode assembly including a positive electrode, a negative electrode, and a separator interposed between the positive electrode and the negative electrode, and an electrolyte.

The negative electrode can be manufactured by applying a negative electrode slurry including a negative electrode active material, a polymer material, a conductive material and the like to the negative electrode current collector, similarly to the electrode for secondary battery.

The negative electrode can also be manufactured in a form in which the negative electrode slurry including the negative electrode active material is attached or applied onto the negative electrode current collector, and the negative electrode slurry may further include the conductive material and polymer material as described above, together with the negative electrode active material.

A negative electrode active material for a lithium secondary battery, which is common in the art, can be used as the negative electrode active material. In one example. a material such as lithium metal, lithium alloy, petroleum coke, activated carbon, graphite, silicon, tin, metal oxide or other carbons may be used.

The negative electrode current collector is not particularly limited as long as it has high conductivity without causing chemical changes to the battery. For example, copper, stainless steel, aluminum, nickel, titanium, calcined carbon, copper or stainless steel having a surface treated with carbon, nickel, titanium, silver, etc., aluminum-cadmium alloy, and the like can be used.

The separator separates the negative electrode and the positive electrode, and provides a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. In addition, the electrolyte solution used herein may include an organic liquid electrolyte, an inorganic liquid electrolyte, a solid polymer electrolyte, a gel type polymer electrolyte, a solid inorganic electrolyte, a molten inorganic electrolyte or the like which can be used in the production of a lithium secondary battery, but is not limited thereto.

Specifically, the electrolyte solution may include an organic solvent and a lithium salt. As the organic solvent, any solvent can be used without particular limitation as long as it can serve as a medium through which ions involved in the electrochemical reaction of the battery can migrate. The lithium salt may be used without particular limitation as long as it is a compound capable of providing lithium ions used in a lithium secondary battery.

In order to improve the lifespan characteristics of the battery, suppress a reduction in battery capacity and improve discharge capacity of the battery, the electrolyte solution may further include, for example, one or more additives such as a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride, in addition to the above electrolyte components. In this case, the additive may be included in an amount of 0.1% by weight to 5% by weight based on the total weight of the electrolyte solution.

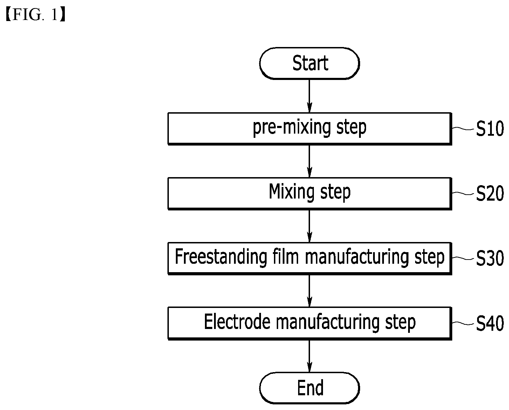

Fig. 1 is a flowchart showing a method of manufacturing an electrode for secondary battery according to an embodiment of the present disclosure. Referring to Fig. 1, a method of manufacturing an electrode for secondary battery according to the present embodiment includes a pre-mixing step (S10) of mixing an active material, a conductive material and a binder, a mixing step (S20) of applying a high shearing force to prepare an electrode composition, a step (S30) of manufacturing a freestanding film using the second electrode composition, and a step (S40) of manufacturing an electrode through a lamination process after attaching the freestanding film onto the electrode current collector.

Here, in the pre-mixing step (S10), the active material, the conductive material, and the binder may be dry-mixed. The molecular weight calculated from the SSG value of the first binder may be larger than the molecular weight calculated from the SSG value of the second binder.

Hereinafter, the contents of the present disclosure will be described by way of more specific examples. However, the following examples are for illustrative purposes only, and the scope of the present disclosure is not limited thereto.

<Example 1>

A premixing step of preparing a mixture in which an active material, a conductive material, and first and second binders were dry-mixed using a Waring blender was performed. Here, the active material is 90 wt% of lithium manganese oxide (LMO), and the conductive material is 2 wt% of Super C65. Here, the active material is 90 wt% of lithium manganese oxide (LMO), and the conductive material is 2 wt% of Super C65. Further, the first binder contains 4 wt% of polytetrafluoroethylene (PTFE) having an SSG value of 2.156, and the second binder contains 4 wt% of polytetrafluoroethylene (PTFE) having an SSG value of 2.186. At this time, the premixing step (S10) was performed at 5000 rpm for 1 minute. Subsequently, a mixing step (S20) in which a shearing force was applied to the mixture prepared in the premixing step (S10) to prepare an electrode composition, was performed using a PBV-0.1L equipment (available from Irie Shokai) at 30 rpm for 5 minutes.

<Example 2>

In Example 1, the active material is 96 wt% of lithium manganese oxide (LMO), the first binder contains 1 wt% of polytetrafluoroethylene (PTFE) having an SSG value of 2.156, and the second binder contains 1 wt% of polytetrafluoro-oethylene (PTFE) having an SSG value of 2.186. Except for these points, an electrode composition was prepared in the same manner as in Example 1.

<Example 3>

In Example 1, the first binder contains 7 wt% of polytetrafluoroethylene (PTFE) having an SSG value of 2.156, and the second binder contains 1 wt% of polytetrafluoroethylene (PTFE) having an SSG value of 2.186. Except for these points, an electrode composition was prepared in the same manner as in Example 1.

<Example 4>

In Example 1, the first binder contains 1 wt% of polytetrafluoroethylene (PTFE) having an SSG value of 2.156, and the second binder contains 7 wt% of polytetrafluoroethylene (PTFE) having an SSG value of 2.186. Except for these points, an electrode composition was prepared in the same manner as in Example 1.

<Comparative Example 1>

In Example 1, the first binder contains 0 wt% of polytetrafluoroethylene (PTFE) having an SSG value of 2.156, and the second binder contains 8 wt% of polytetrafluoroethylene (PTFE) having an SSG value of 2.186. Except for these points, an electrode composition was prepared in the same manner as in Example 1.

<Comparative Example 2>

In Example 1, the first binder contains 8 wt% of polytetrafluoroethylene (PTFE) having an SSG value of 2.156, and the second binder contains 0 wt% of polytetrafluoroethylene (PTFE) having an SSG value of 2.186. Except for these points, an electrode composition was prepared in the same manner as in Example 1.

<Comparative Example 3>

In Example 1, the first binder contains 4 wt% of polytetrafluoroethylene (PTFE) having an SSG value of 2.156, and the second binder contains 4 wt% of polytetrafluoroethylene (PTFE) having an SSG value of 2.17. Except for these points, an electrode composition was prepared in the same manner as in Example 1.

<Comparative Example 4>

In Example 1, the first binder contains 4 wt% of polytetrafluoroethylene (PTFE) having an SSG value of 2.17, and the second binder contains 4 wt% of polytetrafluoroethylene (PTFE) having an SSG value of 2.186. Except for these points, an electrode composition was prepared in the same manner as in Example 1.

<Comparative Example 5>

In Example 1, the active material is 97 wt% of lithium manganese oxide (LMO), the first binder contains 0.5 wt% of polytetrafluoroethylene (PTFE) having an SSG value of 2.156, and the second binder contains 0.5 wt% of polytetrafluoroethylene (PTFE) having an SSG value of 2.186. Except for these points, an electrode composition was prepared in the same manner as in Example 1.

<Comparative Example 6>

In Example 1, the active material is 86 wt% of lithium manganese oxide (LMO), the first binder contains 6 wt% of polytetrafluoroethylene (PTFE) having an SSG value of 2.156, and the second binder contains 6 wt% of polytetrafluoroethylene (PTFE) having an SSG value of 2.186. Except for these points, an electrode composition was prepared in the same manner as in Example 1.

<Comparative Example 7>

In Example 1, the second binder contains polytetrafluoroethylene (PTFE) having an SSG value of 2.237. Except for this point, an electrode composition was prepared in the same manner as in Example 1.

<Experimental Example 1 (Measurement of Tensile Strength)>

For the electrode compositions prepared in Examples 1 to 4 and Comparative Examples 1 to 6, respectively, a freestanding film manufacturing step (S30) of manufacturing a freestanding film having a length of 20mm and a width of 20mm was performed using a Roll Mill equipment (available from Inoue MFG). For each manufactured freestanding film, both ends were fixed with a jig, and then the tensile strength of the freestanding film was measured at a speed of 50 mm/min using Instron UTM equipment, respectively. The results are shown in Table 1 below.

[Table 1]

| | Composition | | | | | | Maximum tensile strength (kgf/cm$^2$) |
|---|---|---|---|---|---|---|---|
| | Positive electron active material (%) | Conductive material (%) | First binder | | Second binder | | |
| | | | SSG | Content | SSG | Content | |
| Example 1 | 90 | 2 | 2.156 | 4 | 2.186 | 4 | 26 |
| Example 2 | 96 | 2 | 2.156 | 1 | 2.186 | 1 | 10 |
| Example 3 | 90 | 2 | 2.156 | 7 | 2.186 | 1 | 37 |
| Example 4 | 90 | 2 | 2.156 | 1 | 2.186 | 7 | 13 |
| Comparative Example 1 | 90 | 2 | 2.156 | 0 | 2.186 | 8 | 2 |
| Comparative Example 2 | 90 | 2 | 2.156 | 8 | 2.186 | 0 | 35 |
| Comparative Example 3 | 90 | 2 | 2.156 | 4 | 2.17 | 4 | 27 |
| Comparative Example 4 | 90 | 2 | 2.17 | 4 | 2.186 | 4 | 7 |
| Comparative Example 5 | 97 | 2 | 2.156 | 0.5 | 2.186 | 0.5 | 1 |
| Comparative Example 6 | 86 | 2 | 2.156 | 6 | 2.186 | 6 | 41 |
| Comparative Example 7 | 90 | 2 | 2.156 | 4 | 2.237 | 4 | 19 |

<Experimental Example 2 (Measurement of Contact Angle)>

For Examples 1 to 4 and Comparative Examples 1 to 6, the freestanding films manufactured in Experimental Example 1 were roll-pressed on a current collector which is an aluminum foil, and then the loading value was set to 5mAh/cm$^2$ and the porosity to 30%. Under these conditions, an electrode manufacturing step (S40) of manufacturing a positive electrode was performed. Then, each of the prepared electrodes was arbitrarily sampled in a size of 5 cm * 5 cm, and 200ul of distilled water was dropped in a total of 5 places corresponding to each corner and the center portion, the contact angle was measured, and the average and standard deviation were calculated. The results are shown in Table 2 below.

[Table 2]

| | Composition | | | | | | Contact angle (°) |
|---|---|---|---|---|---|---|---|
| | Positive electrode active material (%) | Conductive material (%) | First binder | | Second binder | | |
| | | | SSG | Content | SSG | Content | |
| Example 1 | 90 | 2 | 2.156 | 4 | 2.186 | 4 | 129.1±0.8 |
| Example 2 | 96 | 2 | 2.156 | 1 | 2.186 | 1 | 119.3±0.4 |
| Example 3 | 90 | 2 | 2.156 | 7 | 2.186 | 1 | 128.4±2.7 |
| Example 4 | 90 | 2 | 2.156 | 1 | 2.186 | 7 | 129.6±0.5 |
| Comparative Example 1 | 90 | 2 | 2.156 | 0 | 2.186 | 8 | 129.1±0.3 |
| Comparative Example 2 | 90 | 2 | 2.156 | 8 | 2.186 | 0 | 121.8±8.5 |
| Comparative Example 3 | 90 | 2 | 2.156 | 4 | 2.17 | 4 | 123.4±7.2 |
| Comparative Example 4 | 90 | 2 | 2.17 | 4 | 2.186 | 4 | 127.7±1.5 |

(continued)

| | Composition | | | | | | Contact angle (°) |
|---|---|---|---|---|---|---|---|
| | Positive electrode active material (%) | Conductive material (%) | First binder | | Second binder | | |
| | | | SSG | Content | SSG | Content | |
| Comparative Example 5 | 97 | 2 | 2.156 | 0.5 | 2.186 | 0.5 | 107.0±17.9 |
| Comparative Example 6 | 86 | 2 | 2.156 | 6 | 2.186 | 6 | 129.1±0.3 |
| Comparative Example 7 | 90 | 2 | 2.156 | 4 | 2.237 | 4 | 121±10.2 |

<Experimental Example 3 (Measurement of Discharge Capacity)>

For Examples 1 to 4 and Comparative Examples 1 to 6, a lithium metal having a thickness of 200 um was used as a negative electrode together with each manufactured positive electrode to manufacture a coin half cell. Then, for each of the manufactured coin half cells, the discharge capacity value of the first cycle after charging and discharging was calculated under 0.1C/0.1C conditions in the voltage range of 3.0 to 4.3V, and the results are shown in Table 3 below.

[Table 3]

| | Composition | | | | | | Initial discharge capacity (mAh) |
|---|---|---|---|---|---|---|---|
| | Positive electron active material (%) | Conductive material (%) | First binder | | Second binder | | |
| | | | SSG | Content | SSG | Content | |
| Example 1 | 90 | 2 | 2.156 | 4 | 2.186 | 4 | 105.4 |
| Example 2 | 96 | 2 | 2.156 | 1 | 2.186 | 1 | 106.5 |
| Example 3 | 90 | 2 | 2.156 | 7 | 2.186 | 1 | 105.2 |
| Example 4 | 90 | 2 | 2.156 | 1 | 2.186 | 7 | 105.4 |
| Comparative Example 1 | 90 | 2 | 2.156 | 0 | 2.186 | 8 | 106.2 |
| Comparative Example 2 | 90 | 2 | 2.156 | 8 | 2.186 | 0 | 102.6 |
| Comparative Example 3 | 90 | 2 | 2.156 | 4 | 2.17 | 4 | 103.2 |
| Comparative Example 4 | 90 | 2 | 2.17 | 4 | 2.186 | 4 | 106 |
| Comparative Example 5 | 97 | 2 | 2.156 | 0.5 | 2.186 | 0.5 | 106.9 |
| Comparative Example 6 | 86 | 2 | 2.156 | 6 | 2.186 | 6 | 100.3 |
| Comparative Example 7 | 90 | 2 | 2.156 | 4 | 2.237 | 4 | 99.5 |

<Experimental Result Analysis>

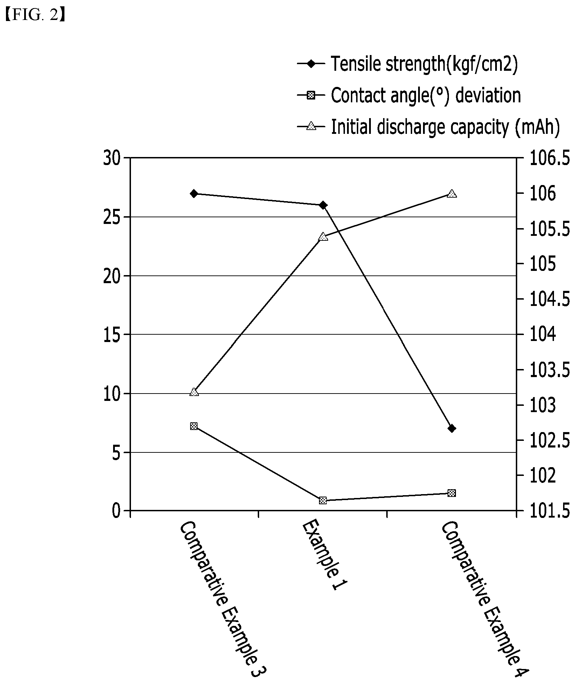

Fig. 2 is a graph for comparing a tensile strength, a contact angle deviation and an initial discharge capacity according to the molecular weight calculated from the SSG value of the binder of an electrode for secondary battery, in Examples and Comparative Examples of the present disclosure. Particularly, Fig. 2 is a graph for comparing the tensile strength, the contact angle deviation and the initial discharge capacity of Example 1, Comparative Example 3 and Comparative Example 4, respectively, among the results shown in Tables 1 to 3. At this time, in Example 1, Comparative Example 3 and Comparative Example 4, the content and content ratio of the first binder and the second binder are the same, but the SSG value of the first binder and the SSG value of the second binder are different from each other.

In the case of Comparative Example 3, the SSG value of the second binder is 2.156, which has a small SSG value compared to Examples, and in the case of Comparative Example 4, the SSG value of the first binder is 2.156, which has a lager SSG value than that of Examples.

Referring to Fig. 2, it can be confirmed that Comparative Example 3 is excellent in tensile strength, but unlike Examples 1 and 4, the contact angle deviation is large and the initial discharge capacity is low. That is, when the second binder having a smaller SSG value compared to Examples is included, it can be confirmed that the agglomeration phenomenon of the first binder and the second binder itself is increased, and the initial discharge capacity and dispersibility are lowered.

Further, it can be confirmed that Comparative Example 4 has excellent in initial discharge capacity, but is low in tensile strength, unlike Examples 1 and 4. That is, when the first binder having a large SSG value compared to Examples is included, it can be confirmed that the molecular weight calculated from the SSG value of the first binder becomes small compared to Example 1, so that the fiberization is not sufficiently performed, and the tensile strength is also reduced.

Thereby, when the first binder and the second binder having the same SSG value as in Example 1 are included, it can be confirmed that the tensile strength is excellent, the dispersibility according to the contact angle deviation and the initial discharge capacity are all excellent as a whole, and thus, the resistance reduction effect is also excellent.

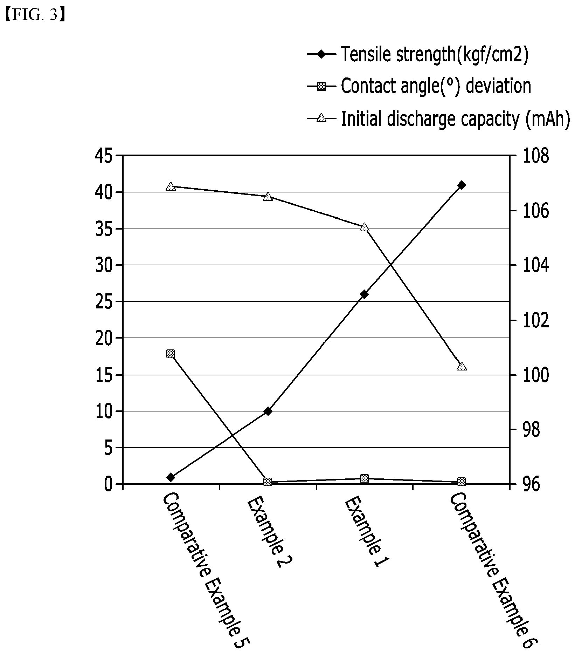

Fig. 3 is a graph for comparing a tensile strength, a contact angle deviation and an initial discharge capacity according to the content of the binder of an electrode for secondary battery, in Examples and Comparative Examples of the present disclosure. Particularly, Fig. 3 is a graph for comparing the tensile strength, the contact angle deviation and the initial discharge capacity of Example 1, Example 2, Comparative Example 5, and Comparative Example 6, respectively, among the results shown in Tables 1 to 3. At this time, in Example 1, Example 2, Comparative Example 3, and Comparative Example 4, the content ratios of the first binder and the second binder are the same, but the total contents are different from each other.

In the order of Comparative Example 5, Example 2, Example 1, and Comparative Example 6, the total contents of the first binder and the second binder increases to 1 wt%, 2 wt%, 10 wt% and 12 wt%.

Referring to Fig. 3, the tensile strength is excellent as the total content of the first binder and the second binder gradually increases, and the dispersibility improves as the deviation of the contact angle gradually decreases. However, it can be confirmed that the initial discharge capacity is gradually lowered. That is, when the total content of the first binder and the second binder is too small, there is a problem that the tensile strength and dispersibility are lowered. Further, when the total content of the first binder and the second binder is too large, the resistance of the binder increases as the binder content increases, which causes a problem that the initial discharge capacity decreases.

Thereby, when having the total content of the first binder and the second binder similarly to Examples 1 and 2, it can be confirmed that the tensile strength is excellent, the dispersibility according to the contact angle deviation and the initial discharge capacity are excellent as a while, and so the resistance reduction effect is also excellent.

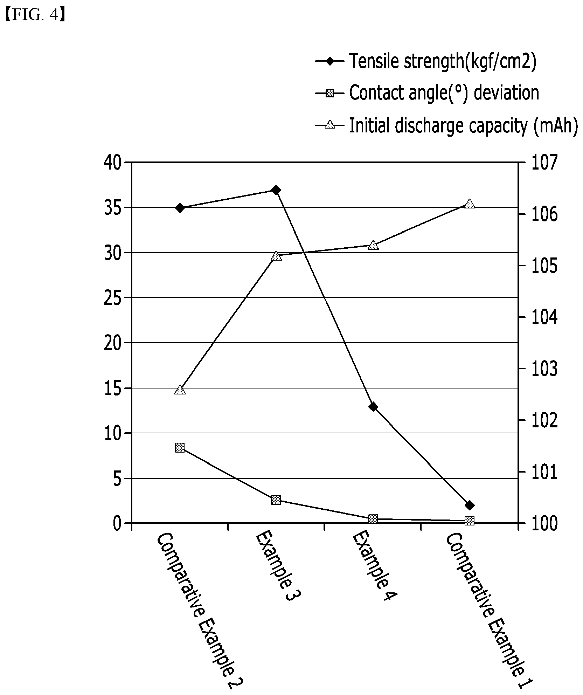

Fig. 4 is a graph for comparing a tensile strength, a contact angle deviation and an initial discharge capacity according to the content ratio of the first binder and the second binder of an electrode for secondary battery, in Examples and Comparative Examples of the present disclosure. Particularly, Fig. 4 is a graph for comparing the tensile strength, the contact angle deviation and the initial discharge capacity of Example 3, Example 4, Comparative Example 1, and Comparative Example 2, respectively, among the results shown in Tables 1 to 3. At this time, in Example 3, Example 4, Comparative Example 1, and Comparative Example 2, the contents of the first binder and the second binder are the same as 8 wt%, but the content ratios are different from each other.

Comparative Example 2 contains 8 wt% of the first binder and 0 wt% of the second binder, Example 3 contains 7 wt% of the first binder and 1 wt% of the second binder, Example 4 contains 1 wt% of the first binder and 7 wt% of the second binder, and Comparative Example 1 contains 0 wt% of the first binder and 8 wt% of the second binder.

Referring to Fig. 4, it can be confirmed that Comparative Example 2 is excellent in tensile strength, but has a large deviation in contact angle and a low initial discharge capacity. Further, In Comparative Example 1, it can be confirmed that the initial discharge capacity is excellent and the contact angle deviation is small, but the tensile strength is low. That is, it can be confirmed that as the content of the first binder having a relatively large molecular weight calculated from the SSG value increases, the initial discharge capacity and dispersibility are deteriorated. On the contrary, it can be confirmed that as the content of the second binder having a relatively small molecular weight calculated from the SSG value is higher, tensile strength is lower.

Thereby, when the content ratio of the first binder and the second binder is included similarly to Examples 3 and 4, it can be confirmed that the tensile strength is excellent, and the dispersibility according to the contact angle deviation and the initial discharge capacity are all excellent as a whole, and so the resistance reduction effect is also excellent.

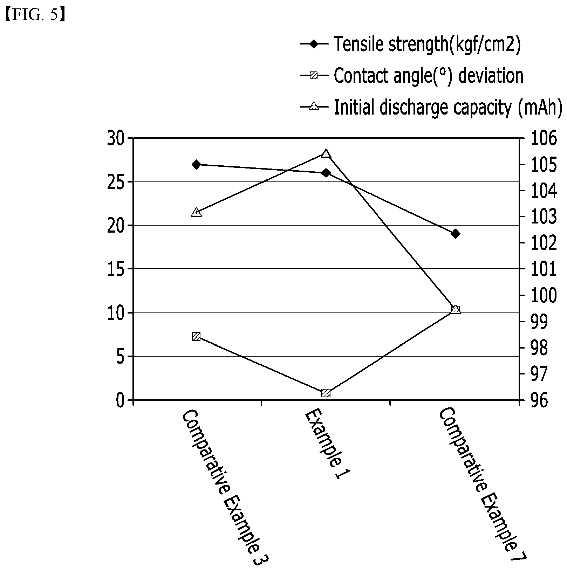

Fig. 5 is a graph for comparing a tensile strength, a contact angle deviation and an initial discharge capacity according to the molecular weight calculated from the SSG value of the second binder of an electrode for secondary battery, in Examples and Comparative Examples of the present disclosure. Particularly, Fig. 5 is a graph for comparing the tensile strength, the contact angle deviation and the initial discharge capacity of Example 1, Comparative Example 3 and Comparative Example 7, respectively, among the results shown in Tables 1 to 3. At this time, in Example 1, Comparative Example 3, and Comparative Example 7, the contents of the first binder and the second binder are the same as 4 wt%, but the SSG values of the second binder are different from each other.

In the case of Comparative Example 3, the SSG value of the second binder is 2.156, which has a small SSG value compared to Examples, and in the case of Comparative Example 7, the SSG value of the second binder is 2.237, which has a lager SSG value than that of Examples.

Referring to Fig. 5, it can be confirmed that Comparative Example 3 is excellent in tensile strength, but unlike Example 1, the contact angle deviation is large and the initial discharge capacity is low. That is, when the second binder having a smaller SSG value compared to Examples is included, it can be confirmed that the fiberization of the second binder is also excessively performed, and the agglomeration phenomenon of the first binder and the second binder itself is increased, and the initial discharge capacity and dispersibility are lowered as compared with Example 1.

Further, it can be confirmed that Comparative Example 7 has low tensile strength and initial discharge capacity, and also has a large contact angle deviation, unlike Example 1. That is, in the case of including the second binder having a large SSG value compared to Examples, it can be confirmed that the fiberization of the second binder is not sufficiently performed, and thus shows similar results to the case in which only the first binder is included as in Comparative Example 2. That is, in the case of Comparative Example 7, it can be confirmed that the tensile strength, the initial discharge capacity, and the dispersibility are all lowered as compared with Example 1.

Thereby, when the second binder having the same SSG value as in Example 1 is included, it can be confirmed that the tensile strength is excellent, and the dispersibility according to the contact angle deviation and the initial discharge capacity are all excellent as a whole, and so the resistance reduction effect is also excellent.

## Claims

1. An electrode for secondary battery comprising:

    an electrode current collector; and
    an electrode layer located on the electrode current collector,
    wherein the electrode layer comprises an electrode composition in which an active material, a conductive material, a first binder and a second binder are dry-mixed, and
    wherein a molecular weight calculated from a SSG value of the first binder is larger than a molecular weight calculated from the SSG value of the second binder;
    the SSG value of the first binder is 2.0 or more and 2.169 or less, and the SSG value of the second binder is 2.171 or more and 2.2 or less, and
    the SSG value is represented by the following Equation (1):

$$\text{SSG (Specific Standard Gravity)} = 2.612 - 0.58 \times \log(Mx), \ (M_x = \text{molecular weight of } x)$$

    determined as described in the description;
    the total content of the first binder and the second binder is 1.01% by weight or more and 11.99% by weight or less based on the total weight of the electrode composition; and
    the first binder and the second binder comprise polytetrafluoroethylene (PTFE), respectively.

2. The electrode for secondary battery according to claim 1, wherein:
    a content ratio of the first binder and the second binder is 1:10 to 10:1.

3. The electrode for secondary battery according to claim 1, wherein:
    the electrode for secondary battery has a contact angle deviation of 0.01 degrees or more and 5.0 degrees or less, determined as described in the description.

4. The electrode for secondary battery according to claim 1, wherein:

    the electrode composition is manufactured into a freestanding film, and
    the freestanding film is attached onto the electrode current collector.

5. The electrode for secondary battery according to claim 4, wherein:
    the freestanding film has a tensile strength of 784,5 kPa (8 kgf/$_{cm}$$^2$) or more and 3920 kPa (40 kgf/cm$^2$), determined as described in the description.

6. A method of manufacturing an electrode for secondary battery, the method comprising the steps of:

    dry-mixing an active material, a conductive material, a first binder and a second binder to prepare a mixture;
    applying a shearing force to the mixture to prepare an electrode composition;

manufacturing a freestanding film with the electrode composition; and
attaching the freestanding film onto the electrode current collector to form an electrode for secondary battery,
wherein a molecular weight calculated from a SSG value of the first binder is larger than a molecular weight calculated from the SSG value of the second binder;
the SSG value of the first binder is 2.0 or more and 2.169 or less, and the SSG value of the second binder is 2.171 or more and 2.2 or less, and
the SSG value is represented by the following Equation (1):

$$SSG \text{ (Specific Standard Gravity)} = 2.612 - 0.58 \times \log(Mx), (M_x = \text{molecular weight of } x)$$

SSG (Specific Standard Gravity)=2.612 - 0.58 × log(Mx), ($M_x$=molecular weight of x)
determined as described in the description;
the total content of the first binder and the second binder is 1.01% by weight or more and 11.99% by weight or less based on the total weight of the electrode composition; and
the first binder and the second binder comprise polytetrafluoroethylene (PTFE), respectively.

7. The method of manufacturing an electrode for secondary battery according to claim 6, wherein:
a content ratio of the first binder and the second binder is 1:10 to 10:1.

8. The method of manufacturing an electrode for secondary battery according to claim 6, wherein:
the electrode for secondary battery has a contact angle deviation of 0.01 degrees or more and 5.0 degrees or less, determined as described in the description.

9. A secondary battery comprising the electrode for secondary battery as set forth in claim 1.


**Patentansprüche**

1. Elektrode für eine Sekundärbatterie, umfassend:

einen Elektrodenstromabnehmer; und
eine Elektrodenschicht, die sich auf dem Elektrodenstromabnehmer befindet,
wobei die Elektrodenschicht eine Elektrodenzusammensetzung umfasst, in der ein aktives Material, ein leitfähiges Material, ein erstes Bindemittel und ein zweites Bindemittel trockengemischt sind, und
wobei ein Molekulargewicht, das aus einem SSG-Wert des ersten Bindemittels berechnet wird, größer ist als ein Molekulargewicht, das aus dem SSG-Wert des zweiten Bindemittels berechnet wird;
der SSG-Wert des ersten Bindemittels 2,0 oder mehr und 2,169 oder weniger beträgt und der SSG-Wert des zweiten Bindemittels 2,171 oder mehr und 2,2 oder weniger beträgt, und
der SSG-Wert durch die folgende Gleichung (1) dargestellt wird:

SSG (spezifische Standarddichte) = 2,612 - 0,58 x log(Mx), ($M_x$ = Molekulargewicht von x), bestimmt wie in der Beschreibung beschrieben;
der Gesamtgehalt des ersten Bindemittels und des zweiten Bindemittels 1,01 Gew.-% oder mehr und 11,99 Gew.-% oder weniger beträgt, bezogen auf das Gesamtgewicht der Elektrodenzusammensetzung; und
das erste Bindemittel und das zweite Bindemittel jeweils Polytetrafluorethylen (PTFE) umfassen.

2. Elektrode für eine Sekundärbatterie nach Anspruch 1, wobei:
ein Gehaltsverhältnis des ersten Bindemittels und des zweiten Bindemittels 1:10 bis 10:1 beträgt.

3. Elektrode für eine Sekundärbatterie nach Anspruch 1, wobei:
die Elektrode für eine Sekundärbatterie eine Kontaktwinkelabweichung von 0,01 Grad oder mehr und 5,0 Grad oder weniger aufweist, bestimmt wie in der Beschreibung beschrieben.

4. Elektrode für eine Sekundärbatterie nach Anspruch 1, wobei:

die Elektrodenzusammensetzung zu einem freistehenden Film hergestellt ist, und
der freistehende Film auf dem Elektrodenstromabnehmer angebracht ist.

**5.** Elektrode für eine Sekundärbatterie nach Anspruch 4, wobei:
der freistehende Film eine Zugfestigkeit von 784,5 kPa (8 kgf/cm$^2$) oder mehr und 3920 kPa (40 kgf/cm$^2$) oder weniger aufweist, bestimmt wie in der Beschreibung beschrieben.

**6.** Verfahren zur Herstellung einer Elektrode für eine Sekundärbatterie, wobei das Verfahren die folgenden Schritte umfasst:

Trockenmischen eines aktiven Materials, eines leitfähigen Materials, eines ersten Bindemittels und eines zweiten Bindemittels, um eine Mischung herzustellen;
Anwenden einer Scherkraft auf die Mischung, um eine Elektrodenzusammensetzung herzustellen;
Herstellen eines freistehenden Films mit der Elektrodenzusammensetzung; und
Anbringen des freistehenden Films auf dem Elektrodenstromabnehmer, um eine Elektrode für eine Sekundärbatterie zu bilden,
wobei ein Molekulargewicht, das aus einem SSG-Wert des ersten Bindemittels berechnet wird, größer ist als ein Molekulargewicht, das aus dem SSG-Wert des zweiten Bindemittels berechnet wird;
der SSG-Wert des ersten Bindemittels 2,0 oder mehr und 2,169 oder weniger beträgt und der SSG-Wert des zweiten Bindemittels 2,171 oder mehr und 2,2 oder weniger beträgt, und
der SSG-Wert durch die folgende Gleichung (1) dargestellt wird:

SSG (spezifische Standarddichte) = 2,612 - 0,58 x log(Mx), ($M_x$ = Molekulargewicht von x), bestimmt wie in der Beschreibung beschrieben;
der Gesamtgehalt des ersten Bindemittels und des zweiten Bindemittels 1,01 Gew.-% oder mehr und 11,99 Gew.-% oder weniger beträgt, bezogen auf das Gesamtgewicht der Elektrodenzusammensetzung; und
das erste Bindemittel und das zweite Bindemittel jeweils Polytetrafluorethylen (PTFE) umfassen.

**7.** Verfahren zur Herstellung einer Elektrode für eine Sekundärbatterie nach Anspruch 6, wobei:
ein Gehaltsverhältnis des ersten Bindemittels und des zweiten Bindemittels 1:10 bis 10:1 beträgt.

**8.** Verfahren zur Herstellung einer Elektrode für eine Sekundärbatterie nach Anspruch 6, wobei:
die Elektrode für eine Sekundärbatterie eine Kontaktwinkelabweichung von 0,01 Grad oder mehr und 5,0 Grad oder weniger aufweist, bestimmt wie in der Beschreibung beschrieben.

**9.** Sekundärbatterie, umfassend die Elektrode für eine Sekundärbatterie nach Anspruch 1.

**Revendications**

**1.** Électrode pour batterie secondaire comprenant :

un collecteur de courant d'électrode ; et
une couche d'électrode située sur le collecteur de courant d'électrode,
la couche d'électrode comprenant une composition d'électrode dans laquelle une matière active, une matière conductrice, un premier liant, et un deuxième liant sont mélangés à sec, et
un poids moléculaire calculé d'après une valeur de la densité spécifique standard (SSG) du premier liant étant supérieur à un poids moléculaire calculé d'après la valeur SSG du deuxième liant ;
la valeur SSG du premier liant étant 2,0 ou davantage et 2,169 ou moins, et la valeur SSG du deuxième liant étant 2,171 ou davantage et 2,2 ou moins, et
la valeur SSG étant représentée par l'équation (1) suivante :

SSG (densité spécifique standard) = 2,612 - 0,58 x log(Mx), (Mx = poids moléculaire de x) déterminée de la façon décrite dans la description ;
la teneur totale en premier liant et en deuxième liant étant 1,01% en poids, ou davantage, et 11,99% en poids, ou moins, d'après le poids total de la composition d'électrode ; et
le premier liant et le deuxième liant comprenant respectivement du polytétrafluoroéthylène (PTFE).

**2.** Électrode pour batterie secondaire selon la revendication 1,
un rapport de teneur du premier liant et du deuxième liant allant de 1/10 à 10/1.

3. Électrode pour batterie secondaire selon la revendication 1,
la déviation de l'angle de contact de l'électrode pour batterie secondaire mesurant 0,01 degré ou davantage et 5,0 degrés ou moins, déterminée de la façon décrite dans la description.

4. Électrode pour batterie secondaire selon la revendication 1,
la composition de l'électrode étant fabriquée sous forme d'un film autoportant, et le film autoportant étant fixé sur le collecteur de courant de l'électrode.

5. Électrode pour batterie secondaire selon la revendication 4,
la résistance à la traction du film autoportant mesurant 784,5 kPa (8 kgf/cm$^2$) ou davantage, et 3 920 kPa (40 kgf/cm$^2$), déterminée de la façon décrite dans la description.

6. Procédé de fabrication d'une électrode pour batterie secondaire, le procédé comprenant les étapes de :

mélange à sec d'une matière active, d'une matière conductrice, d'un premier liant, et d'un deuxième liant pour la préparation d'un mélange ;
application d'une force de cisaillement sur le mélange pour préparer une composition d'électrode ;
fabrication d'un film autoportant avec la composition d'électrode ; et
fixation du film autoportant sur le collecteur de courant de l'électrode pour former une électrode pour batterie secondaire,
un poids moléculaire calculé d'après une valeur SSG du premier liant étant supérieur à un poids moléculaire calculé d'après la valeur SSG du deuxième liant ;
la valeur SSG du premier liant étant 2,0 ou davantage et 2,169 ou moins, et la valeur SSG du deuxième liant étant 2,171 ou davantage, et 2,2 ou moins, et
la valeur SSG étant représentée par l'équation (1) suivante :

SSG (densité spécifique standard) = 2,612 - 0,58 x log(Mx), (Mx = poids moléculaire de x), déterminée de la façon décrite dans la description ;
la teneur totale en premier liant et en deuxième liant étant 1,01% en poids, ou davantage, et 11,99% en poids, ou moins, d'après le poids total de la composition d'électrode ; et
le premier liant et le deuxième liant comprenant respectivement du polytétrafluoroéthylène (PTFE).

7. Procédé de fabrication d'une électrode pour batterie secondaire selon la revendication 6,
un rapport de teneur du premier liant et du deuxième liant allant de 1/10 à 10/1.

8. Procédé de fabrication d'une électrode pour batterie secondaire selon la revendication 6,
la déviation de l'angle de contact de l'électrode pour batterie secondaire mesurant 0,01 degré ou davantage et 5,0 degrés ou moins, déterminée de la façon décrite dans la description.

9. Batterie secondaire comprenant l'électrode pour batterie secondaire selon la revendication 1.

【FIG. 1】

```
                    ┌─────────────┐
                    │    Start    │
                    └──────┬──────┘
                           │
                           ▼
            ┌──────────────────────────────┐
            │       pre-mixing step        │───S10
            └──────────────┬───────────────┘
                           │
                           ▼
            ┌──────────────────────────────┐
            │         Mixing step          │───S20
            └──────────────┬───────────────┘
                           │
                           ▼
            ┌──────────────────────────────┐
            │ Freestanding film manufacturing step │───S30
            └──────────────┬───────────────┘
                           │
                           ▼
            ┌──────────────────────────────┐
            │  Electrode manufacturing step │───S40
            └──────────────┬───────────────┘
                           │
                           ▼
                    ┌─────────────┐
                    │     End     │
                    └─────────────┘
```

【FIG. 2】

【FIG. 3】

Legend:
- Tensile strength(kgf/cm2)
- Contact angle(°) deviation
- Initial discharge capacity (mAh)

X-axis categories: Comparative Example 5, Example 2, Example 1, Comparative Example 6

【FIG. 4】

Legend:
- ◆— Tensile strength(kgf/cm2)
- ▣— Contact angle(°) deviation
- △— Initial discharge capacity (mAh)

X-axis categories: Comparative Example 2, Example 3, Example 4, Comparative Example 1

【FIG. 5】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200137054
- KR 1020210137263
- US 2019305316 A
- WO 2015161289 A
- KR 20140099715